# FASCICULE DE BREVET EUROPEEN

(11) **EP 3 565 796 B1**
(45) Date de publication et mention de la délivrance du brevet: **12.08.2020**
(21) Numéro de dépôt: 17832542.9
(22) Date de dépôt: 29.12.2017
(51) Int. Cl.: C04B 41/89, F01D 5/28

(54) **PIECE COMPRENANT UN SUBSTRAT ET UNE BARRIERE ENVIRONNEMENTALE**
TEIL MIT EINEM SUBSTRAT UND EINER UMWELTBARRIERE
PART COMPRISING A SUBSTRATE AND AN ENVIRONMENTAL BARRIER

(30) Priorité: 06.01.2017 FR 1750127
(43) Date de publication de la demande: 13.11.2019
(73) Titulaire: Safran Ceramics, 33185 Le Haillan (FR); Centre National de la Recherche Scientifique, 75016 Paris (FR); Université de Bordeaux, 33000 Bordeaux (FR)
(72) Inventeur: PIN, Lisa, 77550 Moissy-Cramayel (FR); ARNAL, Simon, 33000 Bordeaux (FR); REBILLAT, Francis, 33600 Pessac (FR); MAUVY, Fabrice, 33610 Canejan (FR)
(74) Mandataire: Cabinet Beau de Loménie
(86) Numéro de dépôt international: PCT/FR2017/053872
(87) Numéro de publication internationale: WO 2018/127652

(56) Documents cités:
- EP-A2- 2 918 570
- WO-A1-2014/150380

## Description

### Arrière-plan de l'invention

L'invention concerne la protection d'un substrat dont au moins une partie adjacente à une surface du substrat est en un matériau contenant du silicium, lors d'une utilisation à haute température en milieu oxydant, par formation d'une barrière environnementale sur la surface du substrat.

Un domaine particulier d'application de l'invention est la protection de pièces en matériau composite à matrice céramique (CMC) formant des parties chaudes de turbines à gaz, telles que des parois de chambre de combustion, ou des anneaux de turbine, des distributeurs de turbine ou des aubes de turbines, pour des moteurs aéronautiques ou des turbines industrielles.

Pour de telles turbines à gaz, le souci d'améliorer le rendement et de réduire les émissions polluantes conduit à envisager des températures toujours plus élevées dans les chambres de combustion.

Il a donc été proposé de remplacer les matériaux métalliques par des matériaux CMC, notamment pour des parois de chambres de combustion ou anneaux de turbine. En effet, les matériaux CMC sont connus pour posséder à la fois de bonnes propriétés mécaniques permettant leur utilisation pour des éléments de structure et la capacité de conserver ces propriétés à des températures élevées. Les matériaux CMC comportent un renfort fibreux en fibres réfractaires, typiquement en carbone ou en céramique, qui est densifié par une matrice céramique, par exemple en SiC.

Dans les conditions de fonctionnement des turbines aéronautiques, c'est-à-dire à haute température sous atmosphère oxydante et humide, les matériaux CMC sont sensibles au phénomène de corrosion. La corrosion du CMC résulte de l'oxydation du SiC en silice qui, en présence de vapeur d'eau, se volatilise sous forme d'hydroxydes de silicium Si(OH)₄. Les phénomènes de corrosion entraînent une récession du CMC et affectent la durée de vie de ce dernier. Afin de limiter cette dégradation en fonctionnement, il a été envisagé de former à la surface des matériaux CMC des revêtements de barrière environnementale. De tels revêtements peuvent comporter une couche de liaison en silicium ainsi qu'une couche de silicate de terre rare positionnée sur la couche de liaison. La couche de liaison permet, d'une part, d'améliorer l'accroche de la couche de silicate de terre rare et, d'autre part, de former une couche de silice protectrice, dont la faible perméabilité à l'oxygène participe à la protection du CMC contre l'oxydation. La couche de silicate de terre rare permet, quant à elle, de limiter la diffusion de la vapeur d'eau vers la couche de silice formée par oxydation du silicium et par conséquent de limiter la récession de celle-ci. De tels revêtements de barrière environnementale sont décrites dans WO 2014/150380. Toutefois, la couche de silicate de terre rare peut elle-même être sensible au phénomène de récession et se volatiliser en fonctionnement, affectant ainsi négativement la durée de vie du substrat revêtu. Il est souhaitable d'améliorer la résistance à la récession ainsi que l'effet barrière aux espèces oxydantes des revêtements de barrière environnementale.

Il existe donc un besoin pour disposer de nouvelles barrières environnementales conférant au matériau sous-jacent une durée de vie améliorée en fonctionnement.

### Objet et résumé de l'invention

A cet effet, l'invention propose, selon un premier aspect, une pièce comprenant un substrat, dont au moins une partie adjacente à une surface du substrat est en un matériau contenant du silicium, et une barrière environnementale formée sur la surface du substrat, la barrière environnementale comprenant :
- une première couche comprenant au moins un premier silicate de terre rare et présentant une taille moyenne de grains inférieure ou égale à 1µm, et
- une seconde couche recouvrant la première couche, la seconde couche comprenant au moins un second silicate de terre rare et présentant une taille moyenne de grains supérieure à 1µm.

Sauf mention contraire, on désigne par « taille moyenne » la dimension donnée par la distribution granulométrique statistique à la moitié de la population, dite D50. Sauf mention contraire, la taille d'un grain désigne la plus grande dimension de ce grain.

La taille moyenne de grains peut être déterminée par analyse d'images obtenues par microscopie électronique à balayage (MEB).

Le fait que la première couche présente une taille moyenne de grains inférieure ou égale à 1µm permet avantageusement d'améliorer l'effet barrière de la barrière environnementale vis-à-vis de la diffusion des espèces oxydantes. En effet, la microstructure submicronique de la première couche présente une densité importante de joints de grains qui constituent des barrières de diffusion aux espèces oxydantes. Par ailleurs, le fait que la seconde couche présente une taille moyenne de grains supérieure à 1µm confère à la barrière environnementale une meilleure tenue à la récession. En effet, les joints de grains constituent des lieux préférentiels de volatilisation et la seconde couche, présentant une taille moyenne de grains relativement élevée et donc une densité de joints de grains limitée, présente ainsi une résistance accrue vis-à-vis de ce phénomène.

L'invention fournit ainsi une barrière environnementale conférant, au substrat sous-jacent, une durée de vie améliorée à haute température en environnement oxydant et humide.

Dans un exemple de réalisation, la seconde couche présente une taille moyenne de grains supérieure ou égale à 3µm.

Une telle caractéristique permet avantageusement d'améliorer davantage encore la tenue à la récession présentée par la seconde couche du fait d'une densité de joints de grains réduite.

Dans un exemple de réalisation, la seconde couche présente une taille moyenne de grains supérieure ou égale à 5µm.

Une telle caractéristique permet avantageusement d'améliorer davantage encore la tenue à la récession présentée par la seconde couche du fait d'une densité de joints de grains réduite.

Dans un exemple de réalisation, la seconde couche présente une taille moyenne de grains supérieure ou égale à 10µm.

Une telle caractéristique permet avantageusement d'améliorer davantage encore la tenue à la récession présentée par la seconde couche du fait d'une densité de joints de grains réduite.

Dans un exemple de réalisation, la seconde couche est présente au contact de la première couche.

Dans un exemple de réalisation, le second silicate de terre rare est un monosilicate de terre rare.

La mise en œuvre d'un monosilicate de terre rare dans la seconde couche permet avantageusement d'améliorer davantage encore la tenue de la barrière environnementale à la récession dans la mesure où les monosilicates de terre rare sont moins sensibles à ce phénomène que les disilicates de terre rare.

Dans un exemple de réalisation, le premier silicate de terre rare est un disilicate de terre rare et le second silicate de terre rare est un monosilicate de terre rare.

Dans un exemple de réalisation, le premier silicate de terre rare et le second silicate de terre rare sont choisis, indépendamment l'un de l'autre, parmi : un silicate d'ytterbium et un silicate d'yttrium.

Dans un exemple de réalisation, le premier silicate de terre rare est le disilicate d'yttrium et le second silicate de terre rare est le monosilicate d'ytterbium.

Dans un exemple de réalisation, la barrière environnementale comprend en outre une couche d'accrochage comprenant du silicium présente entre la première couche et la surface du substrat.

La présente invention vise également un procédé de fabrication d'une pièce telle que décrite plus haut, le procédé comprenant au moins une première étape de formation de la première couche sur la surface du substrat, et une deuxième étape, réalisée après la première étape, durant laquelle la seconde couche est formée sur la première couche.

Le procédé peut en outre comporter, avant la première étape, une étape de formation de la couche d'accrochage sur la surface du substrat.

La présente invention vise également un procédé d'utilisation d'une pièce telle que décrite plus haut, le procédé comprenant au moins une étape d'utilisation de ladite pièce à une température supérieure ou égale à 800°C en milieu oxydant et humide.

### Brève description des dessins

D'autres caractéristiques et avantages de l'invention ressortiront de la description suivante, donnée à titre non limitatif, en référence aux dessins annexés, sur lesquels :
- la figure 1 illustre, de manière schématique, une pièce selon un premier mode de réalisation de l'invention,
- la figure 2 illustre, de manière schématique, une pièce selon un deuxième mode de réalisation de l'invention,
- la figure 3 est un ordinogramme montrant une succession d'étapes qui peuvent être mises en œuvre pour fabriquer une pièce selon l'invention,
- les figures 4 et 5 sont des photographies obtenues par microscopie électronique montrant respectivement une première et une seconde couches utilisables dans le cadre de l'invention,
- la figure 6 est un résultat d'essai évaluant l'influence de la taille moyenne de grains sur l'effet barrière vis-à-vis de la diffusion des espèces oxydantes conféré par des couches de silicate de terre rare, et
- la figure 7 est un résultat d'essai évaluant l'influence de la taille moyenne de grains sur la résistance à la récession de couches de silicate de terre rare.

### Description détaillée de modes de réalisation

Dans la description détaillée qui suit, on envisage la formation d'une barrière environnementale sur un substrat en matériau CMC contenant du silicium. L'invention est toutefois applicable à des substrats en matériau réfractaire monolithique contenant du silicium et, plus généralement, à des substrats dont au moins une partie adjacente à une surface externe du substrat est en un matériau réfractaire (composite ou monolithique) contenant du silicium. Ainsi, l'invention vise notamment la protection de matériaux réfractaires constitués par des céramiques monolithiques, par exemple en carbure de silicium SiC ou nitrure de silicium Si₃N₄, mais plus particulièrement la protection de matériaux composites réfractaires tels que des matériaux composites à matrice céramique (CMC) contenant du silicium, par exemple des CMC à matrice au moins partiellement en SiC.

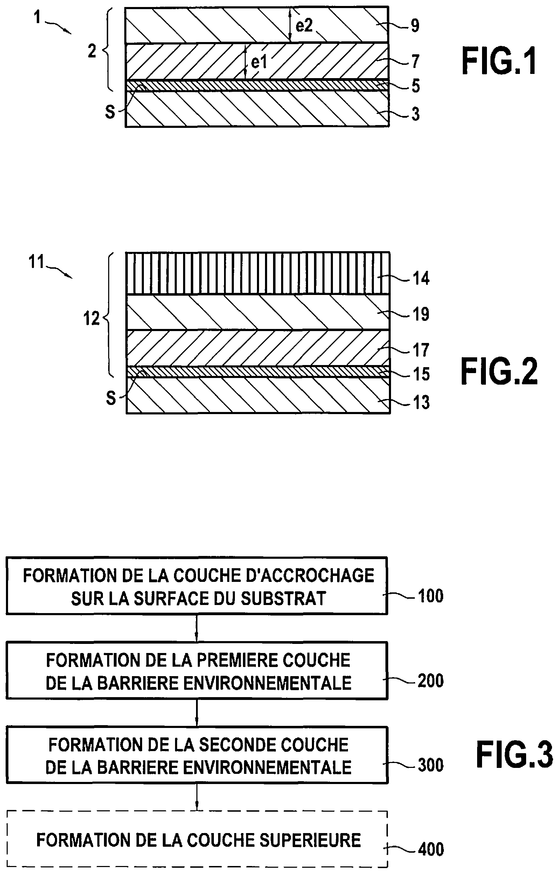

La figure 1 montre une pièce 1 formée d'un substrat 3 muni d'une barrière environnementale 2 selon un premier mode de réalisation de l'invention. La surface S du substrat 3 est formée d'un matériau réfractaire contenant du silicium.

Le substrat 3 en matériau CMC contenant du silicium comprend un renfort fibreux qui peut être en fibres de carbone (C) ou en fibres céramiques, par exemple en fibres de SiC ou formées essentiellement de SiC, incluant des fibres en Si-C-O ou Si-C-O-N, c'est-à-dire contenant aussi de l'oxygène et éventuellement de l'azote. De telles fibres sont produites par la société Nippon Carbon sous la référence « Nicalon » ou « Hi-Nicalon » ou « Hi-Nicalon Type-S », ou par la société Ube Industries sous la référence « Tyranno-ZMI ». Les fibres céramiques peuvent être revêtues d'une mince couche d'interphase en carbone pyrolytique (PyC), en nitrure de bore (BN) ou en carbone dopé au bore (BC, avec 5%at. à 20%at. de B, le complément étant C).

Le renfort fibreux est densifié par une matrice qui est formée, dans son intégralité ou au moins dans une phase externe de celle-ci, par un matériau contenant du silicium, tel qu'un composé du silicium, par exemple SiC ou un système ternaire Si-B-C. Par phase externe de matrice, on entend une phase de matrice formée en dernier, la plus éloignée des fibres du renfort. Ainsi, la matrice peut être formée de plusieurs phases de natures différentes, et peut par exemple être :
une matrice mixte C-SiC (le SiC étant du côté externe), ou
une matrice séquencée avec une alternance de phases SiC et de phases de matrice de moindre rigidité, par exemple en carbone pyrolytique (PyC), nitrure de bore (BN) ou carbone dopé au bore (BC), avec une phase terminale de matrice en SiC, ou
une matrice auto-cicatrisante avec des phases de matrice en carbure de bore (B₄C) ou en un système ternaire Si-B-C, éventuellement avec carbone libre (B₄C + C, Si-B-C + C), et avec une phase terminale Si-B-C ou SiC.

La matrice peut être au moins en partie formée par CVI de manière connue en soi. En variante, la matrice peut être au moins en partie formée par voie liquide (imprégnation par une résine précurseur de la matrice et transformation par réticulation et pyrolyse, le processus pouvant être répété) ou par infiltration de silicium à l'état fondu (procédé de « Melt-Infiltration »). Dans ce dernier cas, une poudre est introduite dans le renfort fibreux éventuellement partiellement densifié, cette poudre pouvant être une poudre de carbone et éventuellement de céramique, et une composition métallique à base de silicium à l'état fondu est ensuite infiltrée pour former une matrice de type SiC-Si.

La barrière environnementale 2 est formée sur toute la surface externe S du substrat 3 ou sur une partie seulement de cette surface S, par exemple lorsque seulement une partie de la surface S doit être protégée. Dans l'exemple illustré à la figure 1, la barrière environnementale 2 comprend une première couche 7 et une seconde couche 9, la seconde couche 9 étant présente sur la première couche 7. La première couche 7 comprend au moins un premier silicate de terre rare et présente une taille moyenne de grains inférieure ou égale à 1 µm. Comme évoqué plus haut, la microstructure particulière de la première couche 7 confère à celle-ci une conductivité ionique diminuée, rendant plus difficile la diffusion des espèces réactives oxydantes et corrosives. La seconde couche 9 comprend au moins un second silicate de terre rare et présente une taille moyenne de grains supérieure à 1 µm.Comme évoqué plus haut, la microstructure de la seconde couche permet avantageusement d'améliorer la tenue de la barrière environnementale à la récession.

Dans cet exemple, la seconde couche 9 est au contact de la première couche 7 mais on ne sort pas du cadre de l'invention lorsqu'une couche intercalaire est présente entre la première couche et la seconde couche. Dans l'exemple illustré à la figure 1, la seconde couche 9 recouvre entièrement la première couche 7.

Dans l'exemple de la figure 1, la barrière environnementale présente en outre une couche d'accrochage 5 présente entre le substrat 3 et la première couche 7. Dans l'exemple illustré, la couche d'accrochage 5 est présente au contact de la surface S du substrat 3. Dans cet exemple, la première couche 7 est au contact de la couche d'accrochage 5.

La première couche 7 peut comporter un unique premier silicate de terre rare. En variante, la première couche 7 comporte plusieurs premiers silicates de terre rare distincts. En particulier, dans ce dernier cas, la première couche 7 peut être sous la forme d'une solution solide et peut, par exemple, comprendre du disilicate d'ytterbium et du disilicate d'yttrium.

Ledit au moins un premier silicate de terre rare peut être présent, dans la première couche 7, en une teneur molaire supérieure ou égale à 50%, voire à 80%. Dans un exemple de réalisation, la première couche 7 peut être constituée dudit au moins un premier silicate de terre rare. En variante, la première couche 7 peut comprendre, en plus du premier silicate de terre rare, un ou plusieurs composés complémentaires comme de l'alumine.

De manière similaire, la seconde couche 9 peut comporter un unique second silicate de terre rare. En variante, la seconde couche 9 comporte plusieurs seconds silicates de terre rare distincts. En particulier, dans ce dernier cas, la seconde couche 9 peut être sous la forme d'une solution solide et peut, par exemple, comprendre du disilicate d'ytterbium et du disilicate d'yttrium.

Ledit au moins un second silicate de terre rare peut être présent, dans la seconde couche 9, en une teneur molaire supérieure ou égale à 50%, voire à 80%. Dans un exemple de réalisation, la seconde couche 9 peut être constituée dudit au moins un second silicate de terre rare. En variante, comme pour la première couche 7, la seconde couche 9 peut comprendre, en plus du second silicate de terre rare, un ou plusieurs composés complémentaires comme de l'alumine.

Chaque second silicate de terre rare peut ou non présenter la même composition chimique que le ou les premier(s) silicate(s) de terre rare.

L'épaisseur e₁ de la première couche 7 peut par exemple être comprise entre 50µm et 1,5mm. L'épaisseur e₂ de la seconde couche 9 peut par exemple être comprise entre 50µm et 1,5mm.

L'épaisseur e₂ de la seconde couche 9 peut être inférieure à l'épaisseur e₁ de la première couche 7. En particulier dans ce dernier cas, le second silicate de terre rare peut être un monosilicate de terre rare et le premier silicate de terre rare un disilicate de terre rare. Dans cet exemple, on améliore davantage encore la compatibilité entre la première couche et la seconde couche en termes de coefficient de dilatation thermique, étant donné que les monosilicates de terre rare ont un coefficient de dilatation thermique plus élevé que les disilicates de terre rare.

La couche d'accrochage 5 comprend du silicium et peut par exemple être en silicium ou en mullite (3Al₂O₃.2SiO₂). La couche d'accrochage 5 peut de manière connue en soi former une couche protectrice passivante de silice en fonctionnement (« Thermally Grown Oxide »).

On a représenté, en lien avec la figure 2, une pièce 11 selon un deuxième mode de réalisation selon l'invention. Selon cet exemple, la pièce 11 comprend un substrat 13 à la surface S duquel est présent une barrière environnementale 12. Le substrat 13 peut présenter les mêmes caractéristiques que le substrat 3 décrit plus haut. La barrière environnementale 12 comprend une couche d'accrochage 15 qui peut présenter les mêmes caractéristiques que la couche d'accrochage 5 décrite plus haut, une première couche 17, présente sur la couche d'accrochage 15, qui peut présenter les mêmes caractéristiques que la première couche 7 décrite plus haut et une seconde couche 19, présente sur la première couche 17, qui peut présenter les mêmes caractéristiques que la seconde couche 9 décrite plus haut.

Dans l'exemple selon la figure 2, la barrière environnementale 12 comprend en outre une couche supérieure 14 présente sur la seconde couche 19. Cette couche supérieure 14 est, dans l'exemple illustré, une couche céramique de barrière thermique présentant une structure poreuse. La couche supérieure 14 peut-être en silicate de terre rare. On pourrait en variante former une couche supérieure qui constituerait un revêtement abradable, par exemple dans le cas de pièces en CMC formant des anneaux de turbine. La couche supérieure pourrait encore constituer un revêtement de protection contre les CMAS. Le dépôt de la couche supérieure 14 permet de fonctionnaliser davantage la barrière environnementale. On pourrait en variante avoir une pièce, dépourvue de la couche supérieure 14, dans laquelle la première ou la seconde couche présenterait, en outre, une fonction de barrière thermique, de protection contre les CMAS ou constituerait un revêtement abradable.

La figure 3 illustre un exemple de succession d'étapes qui peut être mise en œuvre pour former une pièce selon l'invention.

Dans un premier temps, la couche d'accrochage peut être formée, de manière connue en soi, sur le substrat par projection thermique à partir d'une poudre ou d'un mélange de poudres ayant la composition désirée (étape 100).

La première couche peut être formée sur le substrat par projection par flamme supersonique (« HVOF ») d'une poudre agglomérée-frittée du premier silicate de terre rare dont la taille moyenne des grains est inférieure au micron (étape 200). La seconde couche peut être formée sur la première couche d'une manière similaire par projection plasma à partir d'une poudre du second silicate de terre rare dont la taille moyenne des grains est supérieure au micron (étape 300). Les première et seconde couches pourraient en variante être formées par d'autres procédés de projection thermique, comme la projection plasma de suspension ou par des méthodes de dépôts par voie liquide, comme l'électrophorèse, l'enduction par trempage (« dip-coating »), le revêtement par pulvérisation (« spray-coating ») à partir d'une suspension d'une poudre dont la taille moyenne des grains est inférieure ou supérieure au micron en fonction de la couche élaborée.

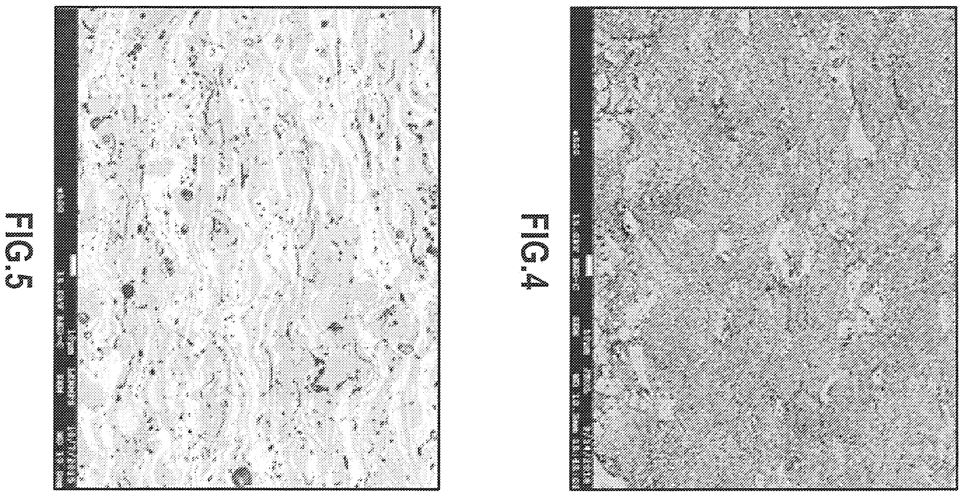

A titre illustratif, la figure 4 fournit une photographie d'une première couche de barrière environnementale en disilicate d'yttrium ayant une taille moyenne de grains inférieure à 1 µm et la figure 5 est une photographie d'une seconde couche de barrière environnementale en disilicate d'yttrium ayant une taille moyenne de grains supérieure à 5 µm.

La couche supérieure 14 de barrière thermique peut être formée, de manière connue en soi, par projection thermique (étape optionnelle 400).

Une fois fabriquée, la pièce peut être utilisée à une température supérieure ou égale à 800°C dans une atmosphère oxydante et humide. On peut, en particulier, l'utiliser à une température comprise entre 800°C et 1500°C, voire entre 800°C et 1300°C. La pièce peut, en particulier, être utilisée sous air humide.

La pièce ainsi fabriquée peut être une pièce pour application aéronautique ou aérospatiale. La pièce peut être une pièce de partie chaude d'une turbine à gaz d'un moteur aéronautique ou aérospatial ou d'une turbine industrielle. La pièce peut être une pièce de turbomachine. La pièce peut constituer une partie au moins d'un distributeur, une partie au moins d'une tuyère ou d'un revêtement de protection thermique, une paroi d'une chambre de combustion, un secteur d'anneau de turbine ou une aube de turbomachine.

### Exemples

### Exemple 1 : évaluation de l'effet barrière aux espèces oxydantes conféré par un exemple de première couche utilisable dans le cadre de l'invention

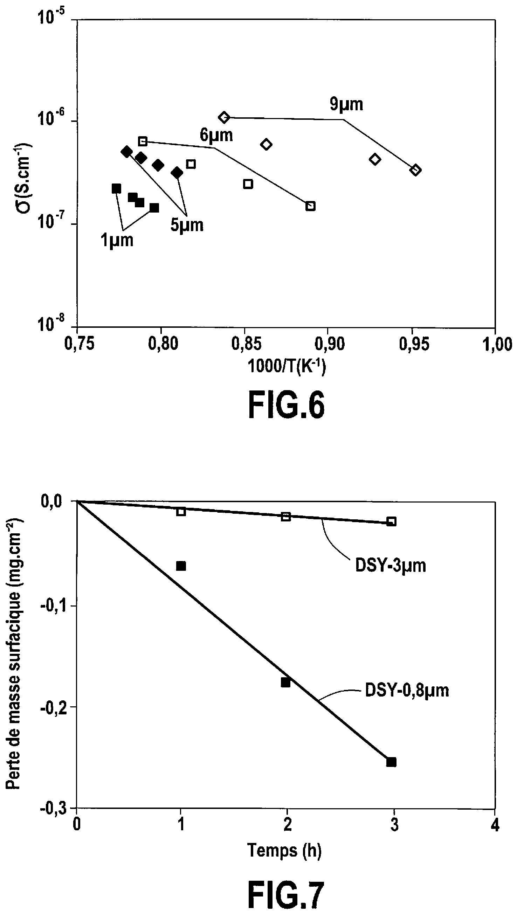

Quatre couches de disilicate d'yttrium de taille moyenne de grains respective de 1µm, 5µm, 6µm et 9µm ont été réalisées. La figure 6 est un résultat d'essai comparant l'effet barrière vis-à-vis des espèces oxydantes conféré par ces quatre couches. Cet essai a été réalisé à différentes températures comprises dans la plage 750°C-1050°C. Cette figure fait apparaître la valeur de la taille moyenne de grains pour chacune des couches évaluées. La figure 6 montre que la conductivité des espèces oxydantes diminue significativement avec la taille moyenne de grains de la couche. En particulier, cet essai montre que la conductivité des espèces oxydantes dans la couche ayant une taille moyenne de grains de 1 µm est très significativement inférieure à celle présentée par les trois autres couches. Les mesures de conductivité ont été réalisées par spectroscopie d'impédance complexe sous air ambiant.

La couche de disilicate d'yttrium de taille moyenne de grains de 1 µm peut constituer la première couche d'un exemple de barrière environnementale selon l'invention et confère un bon effet barrière vis-à-vis des espèces oxydantes.

### Exemple 2 : évaluation de la résistance à la récession présentée par un exemple de seconde couche utilisable dans le cadre de l'invention

On a élaboré deux couches de disilicate d'yttrium de taille moyenne de grains respective de 0,8µm et 3µm. La figure 7 est un résultat d'essai de corrosion comparant la résistance au phénomène de récession présentée par ces deux couches. Cette figure fait apparaître la valeur de la taille moyenne de grains pour chacune des couches évaluées. La figure 7 montre que la couche ayant une taille moyenne de grains de 3 µm présente une résistance à la récession significativement supérieure à celle présentée par la couche ayant une taille moyenne de grains de 0,8 µm.Les mesures de récession ont été déterminées à partir d'essais de corrosion réalisés dans un four de corrosion à 1400°C sous 50kPa de H₂O et 50kPa d'air avec des vitesses de gaz de 5cm/s dans la zone froide du four.

La couche de disilicate d'yttrium de taille moyenne de grains de 3 µm peut constituer la seconde couche d'un exemple de barrière environnementale selon l'invention et présente une bonne résistance à la récession.

L'expression « compris(e) entre ... et ... » doit se comprendre comme incluant les bornes.

## Revendications

1. Pièce (1 ; 11) comprenant un substrat (3; 13), dont au moins une partie adjacente à une surface (S) du substrat est en un matériau contenant du silicium, et une barrière environnementale (2; 12) formée sur la surface du substrat, la barrière environnementale comprenant :
- une première couche (7 ; 17) comprenant au moins un premier silicate de terre rare et présentant une taille moyenne de grains inférieure ou égale à 1µm, et
- une seconde couche (9; 19) recouvrant la première couche, la seconde couche comprenant au moins un second silicate de terre rare et présentant une taille moyenne de grains supérieure à 1µm.

2. Pièce (1 ; 11) selon la revendication 1, dans laquelle la seconde couche (9 ; 19) présente une taille moyenne de grains supérieure ou égale à 3µm.

3. Pièce (1 ; 11) selon la revendication 2, dans laquelle la seconde couche (9 ; 19) présente une taille moyenne de grains supérieure ou égale à 5µm.

4. Pièce (1 ; 11) selon la revendication 3, dans laquelle la seconde couche (9 ; 19) présente une taille moyenne de grains supérieure ou égale à 10µm.

5. Pièce (1 ; 11) selon l'une quelconque des revendications 1 à 4, dans laquelle la barrière environnementale (2; 12) comprend en outre une couche d'accrochage (5 ; 15) comprenant du silicium présente entre la première couche (7 ; 17) et la surface du substrat (3 ; 13).

6. Pièce (1 ; 11) selon l'une quelconque des revendications 1 à 5, dans laquelle la seconde couche (9; 19) est présente au contact de la première couche (7 ; 17).

7. Pièce (1 ; 11) selon l'une quelconque des revendications 1 à 6, dans laquelle le second silicate de terre rare est un monosilicate de terre rare.

8. Pièce (1 ; 11) selon l'une quelconque des revendications 1 à 7, dans laquelle le premier silicate de terre rare et le second silicate de terre rare sont choisis, indépendamment l'un de l'autre, parmi : un silicate d'ytterbium et un silicate d'yttrium.

9. Pièce (1 ; 11) selon la revendication 8, dans laquelle le premier silicate de terre rare est le disilicate d'yttrium et le second silicate de terre rare est le monosilicate d'ytterbium.

10. Procédé de fabrication d'une pièce (1; 11) selon l'une quelconque des revendications 1 à 9, le procédé comprenant au moins une première étape de formation de la première couche (7; 17) sur la surface du substrat, et une deuxième étape, réalisée après la première étape, durant laquelle la seconde couche (9; 19) est formée sur la première couche.

11. Procédé d'utilisation d'une pièce (1 ; 11) selon l'une quelconque des revendications 1 à 9, le procédé comprenant au moins une étape d'utilisation de ladite pièce à une température supérieure ou égale à 800°C en milieu oxydant et humide.

## Patentansprüche

1. Teil (1; 11), umfassend ein Substrat (3; 13), von dem wenigstens ein an eine Oberfläche (S) des Substrats angrenzender Teil aus einem siliziumhaltigen Material besteht, und eine auf der Oberfläche des Substrats gebildete Umgebungsbarriere (2; 12), wobei die Umgebungsbarriere umfasst:
- eine erste Schicht (7; 17), die wenigstens ein erstes Seltenerdsilikat umfasst und eine durchschnittliche Korngröße von weniger als oder gleich 1 µm aufweist, und
- eine zweite Schicht (9; 19), welche die erste Schicht bedeckt, wobei die zweite Schicht wenigstens ein zweites Seltenerdsilikat umfasst und eine durchschnittliche Korngröße von mehr als 1 µm aufweist.

2. Teil (1; 11) nach Anspruch 1, bei dem die zweite Schicht (9; 19) eine durchschnittliche Korngröße von mehr als oder gleich 3 µm aufweist.

3. Teil (1; 11) nach Anspruch 2, bei dem die zweite Schicht (9; 19) eine durchschnittliche Korngröße von mehr als oder gleich 5 µm aufweist.

4. Teil (1; 11) nach Anspruch 3, bei dem die zweite Schicht (9; 19) eine durchschnittliche Korngröße von mehr als oder gleich 10 µm aufweist.

5. Teil (1; 11) nach einem der Ansprüche 1 bis 4, bei dem die Umgebungsbarriere (2; 12) ferner eine Silizium umfassende Haftungsschicht (5; 15) umfasst, die zwischen der ersten Schicht (7; 17) und der Oberfläche des Substrats (3; 13) vorhanden ist.

6. Teil (1; 11) nach einem der Ansprüche 1 bis 5, bei dem die zweite Schicht (9; 19) in Kontakt mit der ersten Schicht (7; 17) vorliegt.

7. Teil (1; 11) nach einem der Ansprüche 1 bis 6, bei dem das zweite Seltenerdsilikat ein Seltenerdmonosilikat ist.

8. Teil (1; 11) nach einem der Ansprüche 1 bis 7, bei dem das erste Seltenerdsilikat und das zweite Seltenerdsilikat unabhängig voneinander ausgewählt sind aus: einem Ytterbiumsilikat und einem Yttriumsilikat.

9. Teil (1; 11) nach Anspruch 8, bei dem das erste Seltenerdsilikat Yttriumdisilikat ist und das zweite Seltenerdsilikat Ytterbiummonosilikat ist.

10. Verfahren zur Herstellung eines Teils (1; 11) nach einem der Ansprüche 1 bis 9, wobei das Verfahren wenigstens einen ersten Schritt zum Bilden der ersten Schicht (7; 17) auf der Oberfläche des Substrats sowie einen nach dem ersten Schritt durchgeführten zweiten Schritt umfasst, während dessen die zweite Schicht (9; 19) auf der ersten Schicht gebildet wird.

11. Verfahren zur Verwendung eines Teils (1; 11) nach einem der Ansprüche 1 bis 9, wobei das Verfahren wenigstens einen Schritt zur Verwendung des Teils bei einer Temperatur von mehr als oder gleich 800 °C in oxidierender und feuchter Umgebung umfasst.

## Claims

1. A part (1; 11) comprising a substrate (3; 13) having, adjacent to a surface (S) of the substrate, at least a portion that is made of a material that contains silicon, and an environmental barrier (2; 12) formed on the surface of the substrate, the environmental barrier comprising:
- a first layer (7; 17) comprising at least one first rare earth silicate and presenting grains with a mean size less than or equal to 1 pm; and
- a second layer (9; 19) covering the first layer, the second layer comprising at least one second rare earth silicate and presenting grains with a mean size greater than 1 µm.

2. A part (1; 11) according to claim 1, wherein the second layer (9; 19) presents grains of a mean size greater than or equal to 3 µm.

3. A part (1; 11) according to claim 2, wherein the second layer (9; 19) presents grains of a mean size greater than or equal to 5 µm.

4. A part (1; 11) according to claim 3, wherein the second layer (9; 19) presents grains of mean size greater than or equal to 10 µm.

5. A part (1; 11) according to any one of claims 1 to 4, wherein the environmental barrier (2; 12) further comprises an adhesion layer (5; 15) comprising silicon present between the first layer (7; 17) and the surface of the substrate (3; 13) .

6. A part (1; 11) according to any one of claims 1 to 5, wherein the second layer (9; 19) is present in contact with the first layer (7; 17).

7. A part (1; 11) according to any one of claims 1 to 6, wherein the second rare earth silicate is a rare earth monosilicate.

8. A part (1; 11) according to any one of claims 1 to 7, wherein the first rare earth silicate and the second rare earth silicate are selected, independently of each other, from: an ytterbium silicate and an yttrium silicate.

9. A part (1; 11) according to claim 8, wherein the first rare earth silicate is yttrium disilicate and the second rare earth silicate is ytterbium monosilicate.

10. A method of fabricating a part (1; 11) according to any one of claims 1 to 9, the method comprising at least a first step of forming the first layer (7; 17) on the surface of the substrate, and a second step, performed after the first step, during which the second layer (9; 19) is formed on the first layer.

11. A method of using a part (1; 11) according to any one of claims 1 to 9, the method comprising at least a step of using said part at a temperature higher than or equal to 800°C in a medium that is oxidizing and wet.
The present invention provides a part (1) comprising a substrate (3) having, adjacent to a surface (S) of the substrate, at least a portion that is made of a material that contains silicon, and an environmental barrier (2) formed on the surface of the substrate, the environmental barrier comprising:
- a first layer (7) comprising at least one first rare earth silicate and presenting grains with a mean size less than or equal to 1 pm; and
- a second layer (9) covering the first layer, the second layer comprising at least one rare earth silicate and presenting grains with a mean size greater than 1 µm.
